# EUROPEAN PATENT APPLICATION

(11) **EP 3 581 831 A1**
(43) Date of publication of application: **18.12.2019**
(21) Application number: 18767558.2
(22) Date of filing: 19.02.2018
(51) Int. Cl.: F16H 61/00

(54) **HYDRAULIC CONTROL DEVICE FOR AUTOMATIC TRANSMISSION**

(30) Priority: 16.03.2017 JP 2017051920
(71) Applicant: Mazda Motor Corporation, Aki-gun, Hiroshima 730-8670 (JP)
(72) Inventor: MATSUURA, Koichi, Aki-gun Hiroshima 730-8670 (JP); MINAMI, Tatsuhiro, Aki-gun Hiroshima 730-8670 (JP); KAJI, Masahiro, Aki-gun Hiroshima 730-8670 (JP); ISHIYAMA, Takashi, Aki-gun Hiroshima 730-8670 (JP)
(74) Representative: Müller-Boré & Partner Patentanwälte PartG mbB
(86) International application number: PCT/JP2018/005664
(87) International publication number: WO 2018/168337

(57) **Abstract**

A hydraulic control device (1) for an automatic transmission includes: a variable displacement oil pump (10); a regulator valve (30); and a lubrication control valve (50) configured to select whether or not oil discharged from the variable displacement oil pump (10) is to be supplied to a to-be-lubricated portion. The lubrication control valve (50) has a control port (54) connected to an open/close port (38) of the regulator valve (30). A controlled pressure at the control port (54) is changed in response to opening and closing of the open/close port (38) to select whether or not the oil is to be supplied to the to-be-lubricated portion.

## Description

### TECHNICAL FIELD

The present invention relates to a hydraulic control device for an automatic transmission.

### BACKGROUND ART

Hydraulic control devices that have been known in the art are designed to supply oil to an automatic transmission (a frictional engagement element or a to-be-lubricated portion) through a variable displacement oil pump (see, for example, Patent Document 1). Such a hydraulic control device supplies oil as a hydraulic fluid to an engaging chamber of a frictional engagement element such as a clutch or a brake, or supplies oil as a lubricating oil to a to-be-lubricated portion.

The hydraulic control device includes a regulator valve that outputs a feedback pressure to the variable displacement oil pump to regulate the discharge pressure of the variable displacement oil pump to generate a line pressure.

### CITATION LIST

### PATENT DOCUMENT

PATENT DOCUMENT 1: Japanese Unexamined Patent Publication No. H02-003780

### SUMMARY OF THE INVENTION

### TECHNICAL PROBLEM

The regulator valve may be designed to function not only to regulate the discharge pressure but also to control whether or not oil discharged from the variable displacement oil pump is to be supplied to the to-be-lubricated portion. In this case, the regulator valve is configured to regulate the discharge pressure of the variable displacement oil pump so that the line pressure becomes equal to a first predetermined pressure. In addition, the regulator valve is configured to, if the line pressure is equal to or lower than a second predetermined pressure set to be a value lower than the first predetermined pressure, prevent the oil from being supplied to the to-be-lubricated portion, and to, if the line pressure is higher than the second predetermined pressure, supply the oil to the to-be-lubricated portion.

If the regulator valve is configured as described above, the regulator valve usually has an open/close port connected to the variable displacement oil pump and the to-be-lubricated portion. While the open/close port is open, oil discharged from the variable displacement oil pump is supplied to the to-be-lubricated portion through the open/close port. While the open/close port is closed, oil is not supplied to the to-be-lubricated portion.

Here, the regulator valve includes a spool provided in a sleeve of the regulator valve. An increase in the line pressure moves this spool from one axial end toward the other axial end of the sleeve.

If the line pressure is higher than the second predetermined pressure, i.e., if the amount of the spool moved from the one axial end of the sleeve is larger than a predetermined amount, the open/close port is open, and oil discharged from the variable displacement oil pump is supplied to the to-be-lubricated portion through the open/close port. In contrast, if the line pressure is equal to or lower than the second predetermined pressure, i.e., if the amount of the spool moved is equal to or smaller than the predetermined amount, the open/close port is closed, and the oil is not supplied to the to-be-lubricated portion.

While the discharge pressure is regulated, the spool moves closer to the one axial end or the other axial end than the position in which the spool lies while the line pressure is equal to the first predetermined pressure (the position in which the amount of the spool moved is larger than the predetermined amount), in response to a variation in the line pressure. Even if the line pressure decreases during this pressure regulation, the oil is supplied to the to-be-lubricated portion as long as the line pressure is higher than the second predetermined pressure. On the other hand, if the line pressure decreases to a pressure equal to or lower than the second predetermined pressure (i.e., if the amount of the spool moved is equal to or smaller than the predetermined amount), the oil is not supplied to the to-be-lubricated portion.

If the regulator valve is designed to function to control whether or not oil discharged from the variable displacement oil pump is to be supplied to the to-be-lubricated portion as described above, the opening of the open/close port needs to be large enough so that while the open/close port is open, a sufficient amount of oil is supplied to the to-be-lubricated portion. This increases the amount of the spool moved to open and close the open/close port, resulting in an increase in the amount of the spool moved to regulate the pressure. This leads to a disadvantageous decrease in the response to regulation of the discharge pressure of the variable displacement oil pump through the regulator valve.

In view of the foregoing background, it is therefore an object of the present invention to provide a hydraulic control device for an automatic transmission, capable of selecting whether or not oil discharged from a variable displacement oil pump is to be supplied to a to-be-lubricated portion of the automatic transmission, in response to the opening/closing of an open/close port of a regulator valve, while ensuring high response to regulation of the discharge pressure (line pressure) of the variable displacement oil pump through the regulator valve.

### SOLUTION TO THE PROBLEM

To achieve the foregoing object, the present invention is directed to a hydraulic control device for an automatic transmission. The device includes: a variable displacement oil pump; a regulator valve configured to output a feedback pressure to the variable displacement oil pump to regulate a discharge pressure of the variable displacement oil pump to generate a line pressure; and a lubrication control valve configured to select whether or not oil discharged from the variable displacement oil pump is to be supplied to a to-be-lubricated portion of the automatic transmission. The regulator valve includes a spool and an open/close port. The spool is provided in a sleeve of the regulator valve to move from one axial end toward the other axial end of the sleeve in response to an increase in the line pressure. If an amount of the spool moved from the one axial end of the sleeve is equal to or smaller than a predetermined amount, the open/close port is open, and if the amount of the spool moved is larger than the predetermined amount, the open/close port is closed. Alternatively, if the amount of the spool moved is equal to or smaller than the predetermined amount, the open/close port is closed, and if the amount of the spool moved is larger than the predetermined amount, the open/close port is open. The lubrication control valve has a control port connected to the open/close port of the regulator valve. A controlled pressure at the control port is changed in response to opening and closing of the open/close port to select whether or not the oil is to be supplied to the to-be-lubricated portion.

According to the foregoing configuration, the controlled pressure at the control port of the lubrication control valve is changed in response to the opening/closing of the open/close port of the regulator valve. This allows selection of whether or not oil discharged from the variable displacement oil pump is to be supplied to the to-be-lubricated portion. In this case, the opening/closing of the open/close port of the regulator valve determines whether or not oil is to be supplied to change the controlled pressure at the control port of the lubrication control valve. This allows the size of the opening of the open/close port to be smaller than if oil is supplied to the to-be-lubricated portion through the open/close port. As a result, the amount of the spool moved to open and close the open/close port can be reduced, and the amount of the spool moved to regulate the discharge pressure of the variable displacement oil pump can also be reduced accordingly. Thus, the controlled pressure at the control port of the lubrication control valve is changed in response to the opening/closing of the open/close port of the regulator valve while high response to regulation of the discharge pressure of the variable displacement oil pump through the regulator valve is achieved. This allows selection of whether or not oil discharged from the variable displacement oil pump is to be supplied to the to-be-lubricated portion.

In one embodiment of the hydraulic control device for the automatic transmission, if the amount of the spool moved is equal to or smaller than the predetermined amount, the open/close port of the regulator valve is open, and if the amount of the spool moved is larger than the predetermined amount, the open/close port is closed. While the open/close port is open, the control port of the lubrication control valve is connected to a drain, and while the open/close port is closed, the controlled pressure is equal to the line pressure so that the lubrication control valve supplies the oil to the to-be-lubricated portion. While the open/close port is open, the controlled pressure is equal to a drain pressure through the open/close port to prevent the lubrication control valve from supplying the oil to the to-be-lubricated portion.

In another embodiment of the hydraulic control device for the automatic transmission, if the amount of the spool moved is equal to or smaller than the predetermined amount, the open/close port of the regulator valve is open, and if the amount of the spool moved is larger than the predetermined amount, the open/close port is closed. While the open/close port is open, the line pressure is supplied to the control port, and while the open/close port is closed, the controlled pressure is equal to a drain pressure so that the lubrication control valve supplies the oil to the to-be-lubricated portion, and while the open/close port is open, the controlled pressure is equal to the line pressure through the open/close port to prevent the lubrication control valve from supplying the oil to the to-be-lubricated portion.

According to these embodiments, the controlled pressure at the control port is equal to the line pressure or the drain pressure. This can facilitate selecting whether or not oil discharged from the variable displacement oil pump is to be supplied to the to-be-lubricated portion.

### ADVANTAGES OF THE INVENTION

As described above, a hydraulic control device for an automatic transmission according to the present invention includes: a variable displacement oil pump; a regulator valve; and a lubrication control valve configured to select whether or not oil discharged from the variable displacement oil pump is to be supplied to a to-be-lubricated portion of the automatic transmission. A controlled pressure at a control port of the lubrication control valve is changed in response to opening and closing of an open/close port of the regulator valve to select whether or not the oil is to be supplied to the to-be-lubricated portion. Thus, the controlled pressure at the control port of the lubrication control valve is changed in response to the opening/closing of the open/close port of the regulator valve while high response to regulation of the discharge pressure of the variable displacement oil pump through the regulator valve is achieved. This allows selection of whether or not oil discharged from the variable displacement oil pump is to be supplied to the to-be-lubricated portion.

### BRIEF DESCRIPTION OF THE DRAWINGS

[FIG. 1] FIG. 1 is a circuit diagram showing a hydraulic control device for an automatic transmission according to an exemplary first embodiment.
[FIG. 2] FIG. 2 shows graphs respectively showing the relation between the stroke length of a regulator valve and the degree of opening of an open/close port and the relation between the stroke length and the rate of oil supplied into a control chamber according to the first embodiment.
[FIG. 3] FIG. 3 is a graph showing the relation between the stroke length of a lubrication control valve and the rate of oil supplied to a lubrication circuit according to the first embodiment.
[FIG. 4] FIG. 4 is a circuit diagram showing a hydraulic control device for an automatic transmission according to an exemplary second embodiment.
[FIG. 5] FIG. 5 is a graph showing the relation between the stroke length of a lubrication control valve and the rate of oil supplied to a lubrication circuit according to the second embodiment.

### DESCRIPTION OF EMBODIMENTS

Exemplary embodiments will now be described in detail with reference to the drawings.

### (First Embodiment)

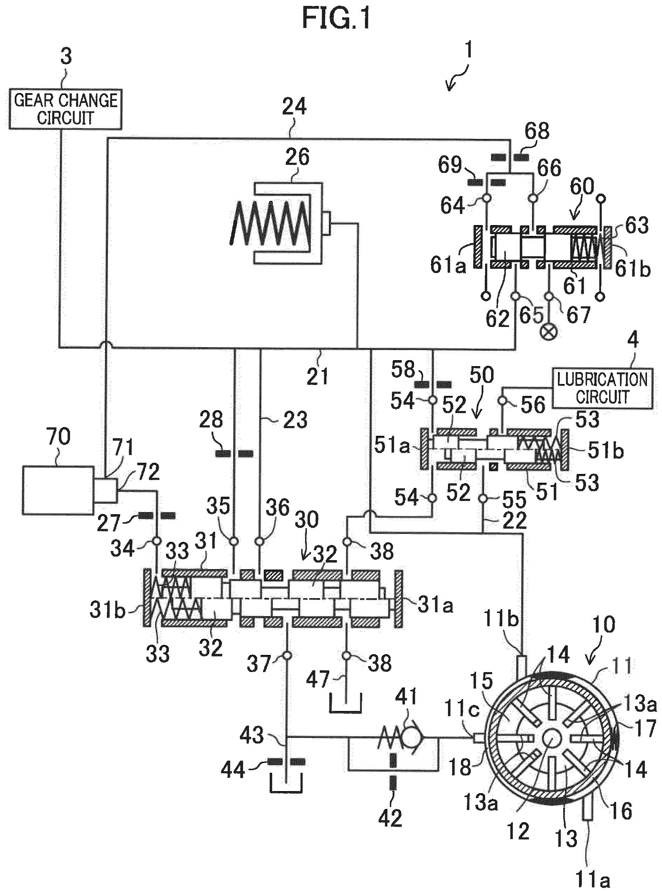

FIG. 1 shows a hydraulic control device 1 for an automatic transmission according to an exemplary first embodiment. The hydraulic control device 1 includes a variable displacement oil pump 10 (hereinafter simply referred to as an "oil pump 10"), which serves to supply oil discharged from the oil pump 10 to a gear change circuit 3 and a lubrication circuit 4 of an automatic transmission provided on a power transmission path between an engine mounted in a vehicle and a wheel of the vehicle.

The gear change circuit 3 is intended to supply oil as a hydraulic fluid into engaging chambers of a plurality of frictional engagement elements (clutches and brakes) of a transmission mechanism for changing gears of the automatic transmission, and to drain oil from the engaging chambers.

The lubrication circuit 4 is intended to supply oil as a lubricating oil to a to-be-lubricated portion of the automatic transmission to be lubricated. The to-be-lubricated portion is a bearing rotatably supporting an input shaft of the automatic transmission (coupled to an output shaft of the engine), a planetary gear set of the transmission mechanism, a friction plate of the frictional engagement element, or any other part.

The oil pump 10 varies the rate (pressure) of the oil discharged by the oil pump 10 by changing the volume of the oil pump 10. Specifically, the oil pump 10 includes a housing 11, a drive shaft 12, a rotor 13, a plurality of vanes 14, a cam ring 16, and a spring 17. The drive shaft 12 is rotatably supported by the housing 11, and is rotated by the input shaft. The rotor 13 is coupled to the drive shaft 12. The vanes 14 are respectively retractably housed in a plurality of slits 13a radially formed through an outer portion of the rotor 13. The cam ring 16 is disposed toward the periphery of the rotor 13 in the housing 11 to be able to be eccentric with respect to the center of rotation of the rotor 13, and defines each of pump chambers 15 serving as one of a plurality of hydraulic fluid chambers together with the rotor 13 and an associated adjacent pair of the vanes 14. The spring 17 always urges the cam ring 16 in a direction in which the eccentricity amount of the cam ring 16 relative to the center of rotation of the rotor 13 increases.

The housing 11 has a suction port 11a through which oil is supplied into the pump chambers 15, and a discharge port 11b through which oil is discharged from the pump chambers 15. The housing 11 includes therein a control chamber 18 defined by an inner peripheral surface of the housing 11 and an outer peripheral surface of a portion of the cam ring 16 remote from the spring 17, and has an inlet 11c communicating with the control chamber 18. Oil from a regulator valve 30 described below (the feedback pressure output from the regulator valve 30) is introduced through the inlet 11c into the control chamber 18. The pressure (feedback pressure) of the oil introduced into the control chamber 18 causes the cam ring 16 to be pressed in a direction in which the eccentricity amount of the cam ring 16 decreases. The magnitude relation between the pressing force and the urging force of the spring 17 changes the eccentricity amount of the cam ring 16, resulting in a change in the volume of oil discharged from the oil pump 10.

The oil discharged from the oil pump 10 is supplied to the gear change circuit 3 through a first oil passage 21, and is supplied to the lubrication circuit 4 through a second oil passage 22 branched from the first oil passage 21. The oil discharged from the oil pump 10 is supplied into the control chamber 18 of the oil pump 10 through a third oil passage 23 branched from the first oil passage 21, and is supplied to an input port 71 of a linear solenoid valve 70 through a fourth oil passage 24 branched from the first oil passage 21.

The third oil passage 23 is provided with the regulator valve 30 that outputs a feedback pressure to the oil pump 10 to regulate the discharge pressure of the oil pump 10 to generate a line pressure. The line pressure is the original pressure of oil supplied as a hydraulic fluid or a lubricating oil to components of the automatic transmission. The second oil passage 22 is provided with a lubrication control valve 50 that selects whether or not the oil discharged from the oil pump 10 is to be supplied to the lubrication circuit 4 (to-be-lubricated portion). Further, the fourth oil passage 24 is provided with a reducing valve 60.

The pressure of oil in the first oil passage 21, the second oil passage 22, a portion of the third oil passage 23 upstream of the regulator valve 30, and a portion of the fourth oil passage 24 upstream of the reducing valve 60 is adjusted to the line pressure through the regulator valve 30. Note that the first oil passage 21 is connected to an accumulator 26 for reducing variations in the line pressure.

The regulator valve 30 includes a spool 32 housed in a sleeve 31. The spool 32 is movable in the axial direction of the spool 32 (the axial direction of the sleeve 31) between a first position in which it abuts against one axial end wall portion 31a of the sleeve 31 (on the right side of FIG. 1) and a second position in which it abuts against the other axial end wall portion 31b of the sleeve 31 (on the left side of FIG. 1). An end portion of the sleeve 31 near the second position includes a compression coil spring 33 urging the spool 32 toward the first position.

An end portion of the sleeve 31 near the second position has a control port 34 to which oil output from an output port 72 of the linear solenoid valve 70 is input through an orifice 27. The sleeve 31 has an adjustment port 35 to which oil (line pressure) from the first oil passage 21 is input through the orifice 28, an input port 36 which is connected to a portion of the third oil passage 23 upstream of the regulator valve 30 and to which oil from the first oil passage 21 is input, and an output port 37 which is connected to a portion of the third oil passage 23 downstream of the regulator valve 30 and through which oil input to the input port 36 is output to the control chamber 18 of the oil pump 10. Further, the sleeve 31 has an open/close port 38 that opens and closes as will be described below. The orifice 27 is intended to prevent vibration of oil from the linear solenoid valve 70 from being transferred to the control port 34, and an orifice 28 is intended to prevent vibration of oil from the first oil passage 21 from being transferred to the adjustment port 35.

Since the area where the oil input to the adjustment port 35 presses the spool 32 toward the second position is made larger than the area where the oil presses the spool 32 toward the first position, the difference between these areas allows the oil input to the adjustment port 35 to press the spool 32 toward the second position.

The axial position of the spool 32 of the regulator valve 30 is determined by the magnitude relation of the sum of a value obtained by converting the pressure of oil input to the control port 34 into the pressing force of the spool 32 (toward the first position) and the urging force of the compression coil spring 33 to a value obtained by converting the pressure of the oil input to the adjustment port 35 (line pressure) into the pressing force of the spool 32 (toward the second position). If the line pressure is zero, the spool 32 is positioned at the first position (one axial end of the sleeve 31). An increase in the line pressure moves the spool 32 from the first position toward the second position (the other axial end of the sleeve 31). The movement of the spool 32 allows selection of whether or not the input port 36 and the output port 37 communicate with each other and whether the open/close port 38 is opened or closed.

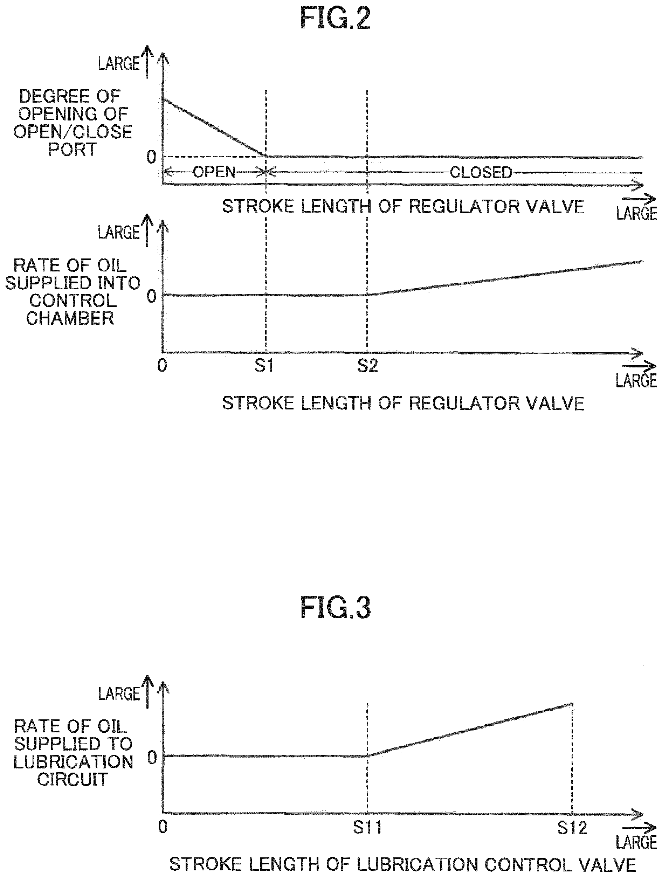

As shown in FIG. 2, if the amount of the spool 32 of the regulator valve 30 moved from the first position (hereinafter referred to as the "stroke length of the regulator valve 30") is larger than a preset amount (s2), i.e., if the line pressure is higher than a first predetermined pressure, the input port 36 and the output port 37 communicate with each other, and oil from the first oil passage 21 (oil at line pressure) is supplied into the control chamber 18 of the oil pump 10 through the third oil passage 23. Then, as the stroke length of the regulator valve 30 increases, the rate of oil supplied into the control chamber 18 increases. Thus, as the stroke length of the regulator valve 30 increases, the rate of oil discharged from the oil pump 10 decreases (i.e., the discharge pressure of the oil pump 10 decreases).

On the other hand, if the stroke length of the regulator valve 30 is equal to or less than the preset amount (S2), i.e., if the line pressure is equal to or lower than the first predetermined pressure, the input port 36 and the output port 37 do not communicate with each other, and the supply of oil into the control chamber 18 through the third oil passage 23 is stopped. At this time, the oil in the control chamber 18 is drained from a drain oil passage 43 described below. This increases the rate of the oil discharged from the oil pump 10. In this way, whether or not the oil at line pressure is to be supplied into the control chamber 18 is selected according to the magnitude of the line pressure with respect to the first predetermined pressure, so that a line pressure equal to the first predetermined pressure is generated.

A portion of the third oil passage 23 downstream of the regulator valve 30 includes a check valve 41 and an orifice 42, which are arranged in parallel. The drain oil passage 43 branches from a portion of the third oil passage 23 between the regulator valve 30 and a combination of the check valve 41 and the orifice 42. The drain oil passage 43 has an orifice 44. Oil output from the output port 37 of the regulator valve 30 (oil at line pressure) is supplied into the control chamber 18 of the oil pump 10 while the orifice 44 substantially prevents much of the oil from flowing through the drain oil passage 43. On the other hand, if the output of the oil from the output port 37 is stopped, oil flows from the control chambers 18 to the drain oil passage 43, and is drained.

The check valve 41 allows oil in the control chamber 18 to flow therethrough when the oil is drained. However, the check valve 41 prevents oil from flowing from the regulator valve 30 into the control chamber 18. Thus, oil from the regulator valve 30 is supplied into the control chamber 18 only through the orifice 42. This orifice 42 is intended to prevent vibration of oil from the regulator valve 30 from being transferred to the control chamber 18 (i.e., to stabilize the feedback pressure applied to the control chamber 18).

In contrast, oil in the control chamber 18 flows into the drain oil passage 43 through both the check valve 41 and the orifice 42, and is drained. This allows the oil in the control chamber 18 to be quickly drained. As a result, if the line pressure decreases, the line pressure can be increased early.

As shown in FIG. 2, if the stroke length of the regulator valve 30 is equal to or less than a predetermined amount (S1) set to be a value smaller than the preset amount (S2), the open/close port 38 is open, and if the stroke length of the regulator valve 30 is greater than the predetermined amount (S1), the open/close port 38 is closed. That is to say, if the line pressure is equal to or lower than a second predetermined pressure set to be a value lower than the first predetermined pressure, the open/close port 38 is open, and if the line pressure is higher than the second predetermined pressure, the open/close port 38 is closed. As the line pressure decreases, the degree of opening of the open/close port 38 increases.

The open/close port 38 is connected to a control port 54 of the lubrication control valve 50 and a drain oil passage 47. While the open/close port 38 is open, the control port 54 of the lubrication control valve 50 communicates with the drain oil passage 47. On the other hand, while the open/close port 38 is closed, the control port 54 does not communicate with the drain oil passage 47.

The reducing valve 60 provided on the fourth oil passage 24 reduces the pressure of oil from the first oil passage 21 from the line pressure, and supplies the resultant oil to the input port 71 of the linear solenoid valve 70. The reducing valve 60 includes a spool 62 housed in a sleeve 61. The spool 62 is movable in the axial direction of the spool 62 (the axial direction of the sleeve 61) between a first position in which it abuts against one axial end wall portion 61a of the sleeve 61 (on the left side of FIG. 1) and a second position in which it abuts against the other axial end wall portion 61b of the sleeve 61 (on the right side of FIG. 1). An end portion of the sleeve 61 near the second position includes a compression coil spring 63 urging the spool 62 toward the first position.

An end portion of the sleeve 61 near the first position has a control port 64. The sleeve 61 has an input port 65 to which oil from the first oil passage 21 is input, an output port 66 through which part of the input oil is output as oil having its pressure reduced from the line pressure, and a drain port 67 through which surplus oil not output from the output port 66 is drained.

Oil output from the output port 66 of the reducing valve 60 is supplied to the input port 71 of the linear solenoid valve 70 through an orifice 68, and is input to the control port 64 through an orifice 69. The two orifices 68 and 69 are intended to stabilize the pressure of the oil output from the output port 66 (hereinafter referred to as the "output pressure").

The axial position of the spool 62 of the reducing valve 60 is determined by the magnitude relation between a value obtained by converting the output pressure into the pressing force of the spool 62 (toward the second position) and the urging force of the compression coil spring 63. Here, if the output pressure increases, the pressure of the oil input to the control port 64 also increases. This allows the spool 62 to move toward the second position. This increases the amount of oil drained from the drain port 67, thereby reducing the output pressure. On the other hand, if the output pressure decreases, the pressure of the oil input to the control port 64 also decreases. This allows the spool 62 to move toward the first position. This reduces the amount of oil drained from the drain port 67, thereby increasing the output pressure. Thus, the output pressure is maintained at a fixed value.

The linear solenoid valve 70 outputs, from its output port 72, oil at the same pressure as the pressure of oil input to the input port 71, or outputs, from its output port 72, oil at a pressure reduced from the pressure of the oil input to the input port 71. The pressure of the oil output from the output port 72 can be changed by a current value supplied to the linear solenoid valve 70. A change in the current value triggers a change in the pressure of the oil output from the output port 72, thereby changing the first predetermined pressure. Here, the first predetermined pressure is set to be a fixed value suitable as the line pressure, and a current value corresponding to the fixed value is supplied to the linear solenoid valve 70.

The lubrication control valve 50 provided on the second oil passage 22 includes a spool 52 housed in a sleeve 51. The spool 52 is movable in the axial direction of the spool 52 (the axial direction of the sleeve 51) between a first position in which it abuts against one axial end wall portion 51a of the sleeve 51 (on the left side of FIG. 1) and a second position in which it abuts against the other axial end wall portion 51b of the sleeve 51 (on the right side of FIG. 1). An end portion of the sleeve 51 near the second position includes a compression coil spring 53 urging the spool 52 toward the first position.

An end portion of the sleeve 51 near the first position has the control port 54. The control port 54 is connected to the open/close port 38 of the regulator valve 30, and is connected to a portion of the fourth oil passage 24 upstream of the reducing valve 60 (substantially the same as the first oil passage 21) through an orifice 58. The orifice 58 is intended to prevent vibration of oil in the fourth oil passage 24 (oil in the first oil passage 21) from being transferred to the control port 54. The sleeve 51 has an input port 55 to which oil in the first oil passage 21 is input, and an output port 56 through which the oil input to the input port 55 is output to the lubrication circuit 4.

While the open/close port 38 of the regulator valve 30 is closed, oil at line pressure is input to the control port 54 of the lubrication control valve 50. The input oil does not flow through the open/close port 38 into the drain oil passage 47. Thus, the controlled pressure at the control port 54 is equal to the line pressure. At this time, the spool 52 of the lubrication control valve 50 is positioned at the second position. In contrast, even if, while the open/close port 38 is open, oil at line pressure is input to the control port 54, the input oil is drained through the open/close port 38 and the drain oil passage 47. Thus, the controlled pressure is equal to the drain pressure (basically, zero) through the open/close port 38. At this time, the spool 52 of the lubrication control valve 50 is positioned at the first position.

As shown in FIG. 3, if the amount of the spool 52 of the lubrication control valve 50 moved from the first position (hereinafter referred to as the "stroke length of the lubrication control valve 50") is equal to or less than a preset reference amount (S11), the input port 55 and the output port 56 do not communicate with each other. On the other hand, if the stroke length of the lubrication control valve 50 is greater than the reference amount, the input port 55 and the output port 56 communicate with each other. As the stroke length of the lubrication control valve 50 increases, the rate of oil supplied to the lubrication circuit 4 increases. While the spool 52 of the lubrication control valve 50 is positioned at the second position (i.e., while the stroke length of the lubrication control valve 50 is a maximum amount (S12)), the rate of oil supplied to the lubrication circuit 4 is maximum.

When the open/close port 38 changes from its open state into its closed state, the spool 52 of the lubrication control valve 50 moves from the first position to the second position, and oil in the first oil passage 21 is supplied to the lubrication circuit 4. On the other hand, when the open/close port 38 changes from its closed state into its open state, the spool 52 of the lubrication control valve 50 moves from the second position to the first position, and the supply of the oil in the first oil passage 21 to the lubrication circuit 4 is stopped.

The size of the opening of each of the input and output ports 55 and 56 of the lubrication control valve 50 is made larger than that of the opening of the open/close port 38 of the regulator valve 30. This is because a sufficient amount of oil is to be supplied to the lubrication circuit 4 (a to-be-lubricated portion) through the openings of the input and output ports 55 and 56.

According to the foregoing configuration, regulating the discharge pressure of the oil pump 10 through the regulator valve 30 allows the line pressure equal to the first predetermined pressure to be generated. During the pressure regulation, the line pressure is usually higher than the second predetermined pressure. Thus, the stroke length of the regulator valve 30 is greater than the predetermined amount (S1), and the open/close port 38 is closed. Since, in this case, the spool 52 of the lubrication control valve 50 is positioned at the second position, the input port 55 and the output port 56 communicate with each other, and the oil in the first oil passage 21 is thus supplied to the lubrication circuit 4. However, if the line pressure is equal to or lower than the second predetermined pressure, the stroke length of the regulator valve 30 is equal to or less than the predetermined amount (S1), and the open/close port 38 is thus opened. As a result, the spool 52 of the lubrication control valve 50 is positioned at the second position so that the input port 55 and the output port 56 do not communicate with each other, and the supply of the oil in the first oil passage 21 to the lubrication circuit 4 is thus stopped.

Here, while the open/close port 38 of the regulator valve 30 is open with the lubrication control valve 50 removed, oil discharged from the oil pump 10 (oil at line pressure) may be supplied through the open/close port 38 to the lubrication circuit 4. On the other hand, while, in the same situation, the open/close port 38 is closed, the supply of oil to the lubrication circuit 4 may be stopped. In this case, the open/close port 38 opens and closes under the conditions opposite to those of the first embodiment. If the stroke length of the regulator valve 30 is greater than the predetermined amount (S1), the open/close port 38 is open, and if the stroke length of the regulator valve 30 is equal to or less than the predetermined amount (S1), the open/close port 38 is closed.

If oil is to be supplied to the lubrication circuit 4 through the open/close port 38 of the regulator valve 30 as described above, the size of the opening of the open/close port 38 needs to be substantially equal to that of the opening of each of the input and output ports 55 and 56 of the lubrication control valve 50 so that a sufficient amount of oil is supplied to the lubrication circuit 4 (the to-be-lubricated portion). However, if an attempt is made to increase the size of the opening of the regulator valve 30 to the degree mentioned above, the amount of the spool 32 moved to open and close the open/close port 38 of the regulator valve 30 needs to be larger than the predetermined amount (S1). Specifically, the amount of the spool 32 moved needs to be substantially equal to at least S12 - S11 (e.g., about three times as large as S1). Accordingly, the amount of the spool 32 moved to regulate the discharge pressure (line pressure) of the oil pump 10 increases. This causes a situation in which the response to regulation of the discharge pressure of the oil pump 10 through the regulator valve 30 decreases.

To address this problem, the lubrication control valve 50 is provided as described above to supply oil at line pressure to the lubrication circuit 4 through the lubrication control valve 50. Opening and closing the open/close port 38 of the regulator valve 30 allows the controlled pressure at the control port 54 of the lubrication control valve 50 to change. Thus, whether or not oil is to be supplied to the lubrication circuit 4 is selected. In this case, the opening/closing of the open/close port 38 determines whether or not oil is supplied to change the controlled pressure. This eliminates the need for increasing the size of the opening of the open/close port 38 to a size equivalent to the size of the opening of each of the input and output ports 55 and 56 of the lubrication control valve 50. As a result, the amount of the spool 32 of the regulator valve 30 moved to open and close the open/close port 38 can be reduced, and the amount of the spool 32 moved to regulate the discharge pressure of the oil pump 10 can also be reduced accordingly.

Thus, the controlled pressure at the control port 54 of the lubrication control valve 50 is changed in response to the opening/closing of the open/close port 38 of the regulator valve 30 while high response to regulation of the discharge pressure of the oil pump 10 through the regulator valve 30 is achieved. This allows selection of whether or not oil discharged from the oil pump 10 is to be supplied to the lubrication circuit 4 (the to-be-lubricated portion).

### (Second Embodiment)

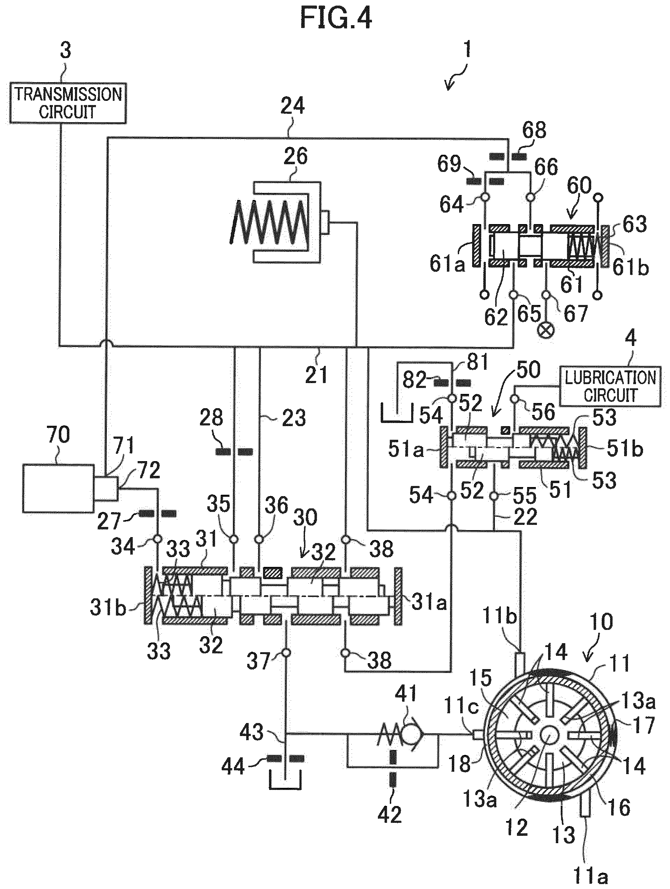

FIG. 4 shows an exemplary second embodiment. Note that the same reference characters as those in FIG. 1 are used to represent equivalent elements, and the detailed explanation thereof will be omitted. In the second embodiment, how the controlled pressure at the control port 54 of the lubrication control valve 50 is changed is designed to be different from that in the first embodiment.

Specifically, in the second embodiment, the open/close port 38 is connected to the control port 54 of the lubrication control valve 50 and the first oil passage 21. While the open/close port 38 is open, the control port 54 communicates with the first oil passage 21. On the other hand, while the open/close port 38 is closed, the control port 54 does not communicate with the first oil passage 21.

In the second embodiment, the control port 54 of the lubrication control valve 50 is connected to the open/close port 38 of the regulator valve 30, and is connected to a drain oil passage 81 through an orifice 82.

While the open/close port 38 of the regulator valve 30 is closed, oil in the first oil passage 21 (oil at line pressure) is input to the control port 54 of the lubrication control valve 50 through the open/close port 38. The input oil hardly flows through the orifice 82 of the drain oil passage 81 into the drain oil passage 81. Thus, the controlled pressure at the control port 54 is equal to the line pressure through the open/close port 38. Thus, the spool 52 of the lubrication control valve 50 is positioned at the second position. In contrast, while the open/close port 38 is closed, oil at line pressure is not input to the control port 54. The oil input to the control port 54 is drained through the drain oil passage 81. Thus, the controlled pressure is equal to the drain pressure (basically, zero). At this time, the spool 52 of the lubrication control valve 50 is positioned at the first position.

Just like the first embodiment, if the stroke length of the regulator valve 30 is equal to or less than the predetermined amount (S1), the open/close port 38 is open, and if the stroke length of the regulator valve 30 is greater than the predetermined amount, the open/close port 38 is closed. That is to say, if the line pressure is equal to or lower than the second predetermined pressure, the open/close port 38 is open, and if the line pressure is higher than the second predetermined pressure, the open/close port 38 is closed. As the line pressure decreases, the degree of opening of the open/close port 38 increases (see FIG. 2).

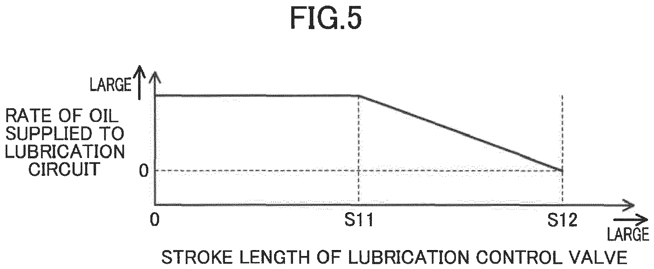

As shown in FIG. 5, if the stroke length of the lubrication control valve 50 is equal to or less than the reference amount (S11), the rate of oil supplied to the lubrication circuit 4 is maximum. If the stroke length of the lubrication control valve 50 is greater than the reference amount, the rate of oil supplied to the lubrication circuit 4 decreases as the stroke length increases. If the stroke length of the lubrication control valve 50 is equal to the maximum amount (S12), the supply of oil to the lubrication circuit 4 is stopped. As a result, if the spool 52 of the lubrication control valve 50 is positioned at the first position, oil in the first oil passage 21 is supplied to the lubrication circuit 4. On the other hand, if the spool 52 is positioned at the second position, the supply of oil in the first oil passage 21 to the lubrication circuit 4 is stopped.

While the line pressure is higher than the second predetermined pressure, and the open/close port 38 is closed, the spool 52 of the lubrication control valve 50 is positioned at the first position, and oil in the first oil passage 21 is thus supplied to the lubrication circuit 4. On the other hand, while the line pressure is equal to or lower than the second predetermined pressure, and the open/close port 38 is open, the spool 52 of the lubrication control valve 50 is positioned at the second position (i.e., the stroke length of the lubrication control valve 50 is equal to the maximum amount (S12)), and the supply of oil in the first oil passage 21 to the lubrication circuit 4 is thus stopped. Even if the line pressure is equal to or lower than the second predetermined pressure, the spool 52 of the lubrication control valve 50 is positioned at the second position as long as the line pressure is equal to or higher than a pressure that is slightly higher than zero.

Thus, in the second embodiment, just like the first embodiment, the opening/closing of the open/close port 38 determines whether or not oil is supplied to change the controlled pressure at the control port 54 of the lubrication control valve 50. This eliminates the need for increasing the size of the opening of the open/close port 38 to a size equivalent to the size of the opening of each of the input and output ports 55 and 56 of the lubrication control valve 50. Thus, the controlled pressure at the control port 54 of the lubrication control valve 50 is changed in response to the opening/closing of the open/close port 38 of the regulator valve 30 while high response to regulation of the discharge pressure of the oil pump 10 through the regulator valve 30 is achieved. This allows selection of whether or not oil discharged from the oil pump 10 is to be supplied to the lubrication circuit 4 (the to-be-lubricated portion).

The present invention is not limited to the embodiments described above. Any change can be made within the scope of the claims as appropriate.

For example, in the first and second embodiments, if the stroke length of the regulator valve 30 is equal to or less than the predetermined amount (S1), the open/close port 38 is open, and if the stroke length of the regulator valve 30 is greater than the predetermined amount, the open/close port 38 is closed. However, if the stroke length of the regulator valve 30 is equal to or less than the predetermined amount, the open/close port 38 may be closed, and if the stroke length of the regulator valve 30 is greater than the predetermined amount, the open/close port 38 may be open. In this case, just like the first embodiment, if the open/close port 38 is closed, oil at line pressure is supplied to the control port 54 of the lubrication control valve 50, and if the open/close port 38 is open, the oil is drained through the control port 54. In this case, just like the second embodiment, if the controlled pressure at the control port 54 is equal to the drain pressure, the lubrication control valve 50 supplies oil to the lubrication circuit 4, and if the controlled pressure is equal to the line pressure, the lubrication control valve 50 stops the supply of oil to the lubrication circuit 4. Alternatively, just like the second embodiment, while the open/close port 38 is closed, oil may be drained through the control port 54 of the lubrication control valve 50, and while the open/close port 38 is opened, oil at line pressure may be supplied to the control port 54. In this case, just like the first embodiment, if the controlled pressure at the control port 54 is equal to the line pressure, the lubrication control valve 50 supplies oil to the lubrication circuit 4, and if the controlled pressure is equal to the drain pressure, the lubrication control valve 50 stops the supply of oil to the lubrication circuit 4.

The foregoing embodiments are merely preferred examples in nature, and the scope of the present invention should not be interpreted in a limited manner. The scope of the present invention is defined by the appended claims, and all variations and modifications belonging to a range equivalent to the range of the claims are within the scope of the present invention.

### INDUSTRIAL APPLICABILITY

The present invention is useful for a hydraulic control device for an automatic transmission, including a variable displacement oil pump, and is useful in a situation where a regulator valve selects whether or not oil discharged from a variable displacement oil pump is to be supplied to a to-be-lubricated portion of an automatic transmission.

### DESCRIPTION OF REFERENCE CHARACTERS

- 1: Hydraulic Control Device for Automatic Transmission
- 4: Lubrication Circuit
- 10: Variable Displacement Oil Pump
- 30: Regulator Valve
- 38: Open/Close Port
- 50: Lubrication Control Valve
- 54: Control Port of Lubrication Control Valve

## Claims

1. A hydraulic control device for an automatic transmission, the device comprising:
a variable displacement oil pump;
a regulator valve configured to output a feedback pressure to the variable displacement oil pump to regulate a discharge pressure of the variable displacement oil pump to generate a line pressure; and
a lubrication control valve configured to select whether or not oil discharged from the variable displacement oil pump is to be supplied to a to-be-lubricated portion of the automatic transmission,
the regulator valve including a spool and an open/close port,
the spool being provided in a sleeve of the regulator valve to move from one axial end toward the other axial end of the sleeve in response to an increase in the line pressure,
the open/close port being open if an amount of the spool moved from the one axial end of the sleeve is equal to or smaller than a predetermined amount and being closed if the amount of the spool moved is larger than the predetermined amount, or the open/close port being closed if the amount of the spool moved is equal to or smaller than the predetermined amount and being open if the amount of the spool moved is larger than the predetermined amount,
the lubrication control valve having a control port connected to the open/close port of the regulator valve, a controlled pressure at the control port being changed in response to opening and closing of the open/close port to select whether or not the oil is to be supplied to the to-be-lubricated portion.

2. The device of claim 1, wherein
if the amount of the spool moved is equal to or smaller than the predetermined amount, the open/close port of the regulator valve is open, and if the amount of the spool moved is larger than the predetermined amount, the open/close port is closed,
while the open/close port is open, the control port of the lubrication control valve is connected to a drain, and
while the open/close port is closed, the controlled pressure is equal to the line pressure so that the lubrication control valve supplies the oil to the to-be-lubricated portion, and
while the open/close port is open, the controlled pressure is equal to a drain pressure through the open/close port to prevent the lubrication control valve from supplying the oil to the to-be-lubricated portion.

3. The device of claim 1, wherein
if the amount of the spool moved is equal to or smaller than the predetermined amount, the open/close port of the regulator valve is open, and if the amount of the spool moved is larger than the predetermined amount, the open/close port is closed,
while the open/close port is open, the line pressure is supplied to the control port, and
while the open/close port is closed, the controlled pressure is equal to a drain pressure so that the lubrication control valve supplies the oil to the to-be-lubricated portion, and while the open/close port is open, the controlled pressure is equal to the line pressure through the open/close port to prevent the lubrication control valve from supplying the oil to the to-be-lubricated portion.
